# EUROPÄISCHE PATENTSCHRIFT

(11) **EP 1 339 149 B1**
(45) Veröffentlichungstag und Bekanntmachung des Hinweises auf die Patenterteilung: **10.12.2008**
(21) Anmeldenummer: 03002269.3
(22) Anmeldetag: 01.02.2003
(51) Int. Cl.: H02G 3/06

(54) **Leitungsführungskanal**
Cable ducting channel
Canalisation pour conduite de cable

(30) Priorität: 20.02.2002 DE 20202607 U
(43) Veröffentlichungstag der Anmeldung: 27.08.2003
(73) Patentinhaber: Tehalit GmbH, 67716 Heltersberg (DE)
(72) Erfinder: Schnurr, Richard, 66957 Vinningen (DE)
(74) Vertreter: Patentanwälte Möll und Bitterich

(56) Entgegenhaltungen:
- DE-A- 4 306 385
- FR-A- 2 610 769
- NL-C- 120 180
- US-A- 5 917 982

## Beschreibung

Die Erfindung betrifft Leitungsführungskanäle gemäß dem Oberbegriff des Anspruchs 1.

Leitungsführungskanäle werden seit über 100 Jahren weltweit in großen Stückzahlen hergestellt, vertrieben und montiert. Sie besitzen üblicherweise ein U-bzw. C-förmiges Unterteil mit Boden, zwei Seitenwänden und Deckelhalteprofilen an den Seitenwänden und einen Deckel, der lösbar auf die Deckelhalteprofile aufrastbar ist. Trennwände im Inneren des Kanalunterteils unterteilen den Querschnitt in gegeneinander isolierte Kammern beispielsweise für Starkstromleitungen und Datenleitungen.

Üblicherweise bestehen die Trennwände aus einer einfachen Leiste, die entweder einstückig mit dem Kanalunterteil hergestellt oder in Halteleisten am Boden des Kanals eingehängt werden kann. Aus der FR 22 08 220 A und der FR 26 10 769 A sind Leitungsführungskanäle bekannt, deren Trennwände aus zwei gegenseitig beabstandeten, parallelen Leisten oder Lippen gebildet sind. Der gegenseitige Abstand ist auf die Stärke der zu verwendenden Befestigungsnägel bzw. -schrauben abgestimmt, die auf diese Weise ohne zusätzlichen Aufwand gegen die Starkstrom- und Schwachstromleitungen isoliert sind.

Es ist bekannt, dass Leitungsführungskanäle in Abschnitten von z. B. 2 m geliefert werden. Bei der Montage muss der Installateur daher mehrere dieser Abschnitte passend zueinander verlegen, und zwar entweder in gerade Linie oder auch im Winkel, meist im rechten Winkel.

Für die Verlegung der Kanäle in gerader Linie bietet die Industrie spezielle Kupplungselemente an, die üblicherweise zwischen Boden und Deckelhalteprofil verklemmt werden.

Für die Verlegung der Kanäle im Winkel gibt es zwei Möglichkeiten. Die sauberste Lösung besteht darin, die beiden benachbarten Kanalenden auf Gehrung zu schneiden. Dieses Verfahren ist jedoch zeit- und kostenaufwändig. Viel schneller geht die Verlegung der Kanäle mit stumpfem Stoß. Dabei ergibt sich jedoch das Problem, dass die die Starkstromleitungen und die Datenleitungen aufnehmenden Kammern nicht mehr gegeneinander abgeschottet sind. Aus diesem Grund bietet die Industrie zu jedem Kanal passende Formteile an, die auf die Kanäle aufgesetzt werden und durch geeignete Formgebung die Kammertrennung im Eckbereich wieder herstellen.

Bei der Verlegung von Leitungsführungskanälen entstehen Innenecken, Außenecken und Flachecken. Für diese drei Ecken muss die Industrie zu der Kanalgröße und zu jedem Kanaltyp passende Formteile bereitstellen. Dies hat einen hohen Aufwand in der Entwicklung, der Produktion, der Lagerung und Versand sowie bei der Bestellung und der Montage zur Folge. Erfahrungsgemäß vertut sich der Installateur häufig bei der Bestellung der Formteile oder die Formteile gehen auf der Baustelle verloren, so dass der Installateur seine Arbeit nicht vollenden kann. Das ist unbefriedigend.

In der CH 582 962 wird eine Verbindungseinrichtung beschrieben, die aus einem Ausgleichsstück besteht, das auf einem Ende eines Kabelkanals aufgeschoben werden kann. Dadurch können verschiedene Kanalabschnitte miteinander verbunden werden.

Der vorliegenden Erfindung liegt daher die Aufgabe zugrunde, einen Leitungsführungskanal der eingangs genannten Art anzugeben, dessen Kammern auch bei stumpf gestoßenen Ecken beliebiger Art gegeneinander abgeschottet werden können.

Diese Aufgabe wird gelöst durch einen Leitungsführungskanal mit den Merkmalen des Anspruchs 1.

Die vorliegende Erfindung verwendet eine einfache Leiste, die bereits beim Hersteller zwischen die beiden Lippen der Kanaltrennwand eingelegt werden kann. Bei der Montage vor Ort muss der Installateur die Leisten der beiden stumpf gestoßenen Kanäle nur so weit herausziehen, dass sie sich im Eckbereich berühren. Dadurch ist die gegenseitige Abschottung und Isolierung der Kammern für Starkstromleitungen und Datenleitungen hergestellt. Diese Lösung zeichnet sich durch eine hohe Flexibilität bei gleichzeitig minimalen Kosten aus.

Ein weiterer Vorteil der erfindungsgemäßen Leiste besteht darin, dass sie bei der Verlegung der Kanäle in gerader Linie auch als Kupplung verwendet werden kann, so dass die Kanäle exakt fluchten.

Gemäß einer Weiterbildung der Erfindung besitzt die Leiste eine von einer Längskante ausgehende V-förmige Aussparung. Im Bereich dieser Aussparung kann die Leiste in der Leistenebene abgewinkelt werden, beispielsweise um 90°. Dadurch ist es möglich, mit nur einer einzigen Leiste die Kammertrennung sowohl bei Innenecken als auch bei Außenecken zu bewirken.

Gemäß einer weiteren Ausgestaltung der Erfindung besitzt die Leiste eine in eine Seitenfläche eingearbeitete V-förmige Nut. Dank dieser Nut kann die Leiste auch senkrecht zur Leitenebene abgewinkelt werden, beispielsweise um 90°. Dadurch ist es möglich, mit nur einer einzigen Leiste die Kammertrennung bei einem Flacheck zu bewirken.

Anhand der Zeichnung soll die Erfindung in Form von Ausführungsbeispielen näher erläutert werden. Es zeigen jeweils als Schrägansicht
- Fig. 1: eine Leiste zur Herstellung der Kammertrennung im Eckbereich von Leitungsführungskanälen,
- Fig. 2: ein Flacheck aus zwei im rechten Winkel verlegten Kanälen mit Kammertrennung im Eckbereich,
- Fig. 3: eine verbesserte Leiste,
- Fig. 4: ein Außeneck aus zwei im rechten Winkel verlegten Kanälen mit Kammertrennung im Eckbereich unter Verwendung einer Leiste nach Fig. 3,
- Fig. 5: ein Inneneck aus zwei im rechten Winkel verlegten Kanälen mit Kammertrennung unter Verwendung der Leiste nach Fig. 3 und
- Fig. 6: ein Flacheck aus zwei im rechten Winkel verlegten Kanälen mit Kammertrennung unter Verwendung einer Leiste nach Fig. 3.

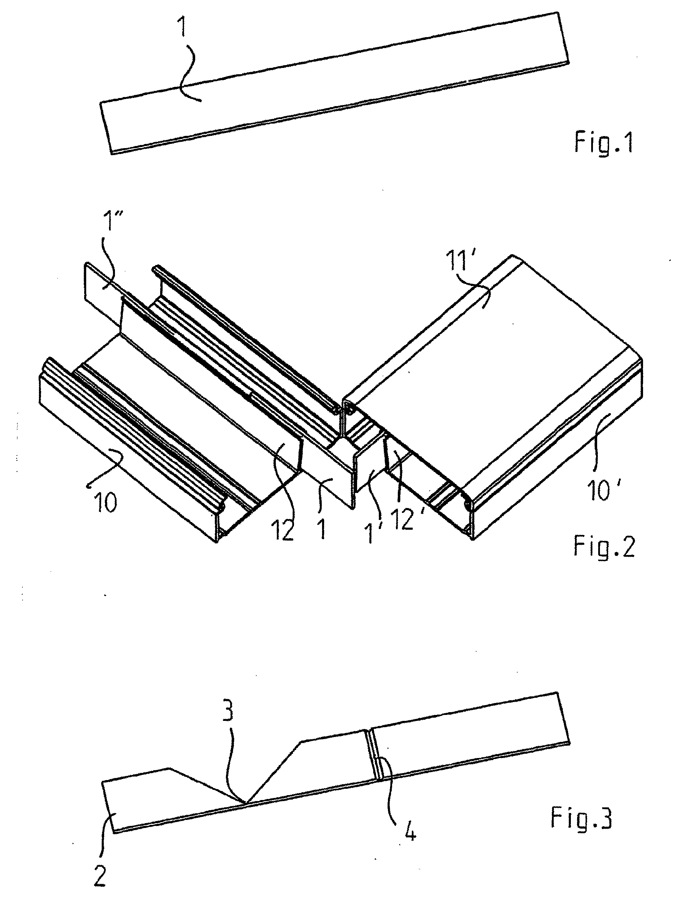

Fig. 1 zeigt eine Leiste zur Verwendung als Verlängerung der Trennwand 12, 12' zur Kammertrennung auch im Eckbereich von stumpf gestoßenen Leitungsführungskanälen 10, 10'. Die Leiste 1 kann aus beliebigem Material bestehen, bevorzugt aus Kunststoff.

Fig. 2 zeigt ein aus zwei Leitungsführungskanälen 10, 10' gebildetes Flacheck. Die Kanalunterteile 10, 10' besitzen einen etwa U-förmigen Querschnitt, gebildet durch einen Boden und zwei Seitenwände mit Deckelhalteprofilen. Im Inneren der Kanalunterteile 10, 10' ist eine aus zwei parallelen Leisten oder Lippen gebildete Trennwand 12, 12' angeformt. Zwischen die Lippen der Trennwand 12, 12' sind die in Fig. 1 dargestellten Leisten 1, 1' eingesteckt. Im Eckbereich sind die beiden Leisten 1, 1' so weit herausgezogen, dass sie sich treffen. Auf diese Weise ist die Kammertrennung mit einfachsten Mitteln auch im Eckbereich realisiert.

Wie die Fig. 2 ferner erkennen lässt, kann die Leiste 1 weitere Funktionen übernehmen. In der Zeichnung ist links dargestellt eine Leiste 1", die als Kupplung für die fluchtende Verbindung eines weiteren Kanalabschnitts (nicht dargestellt) sorgt.

Fig. 3 zeigt eine Leiste 2, in die eine von einer Längskante ausgehende V-förmige Aussparung 3 eingearbeitet ist. An dieser Stelle kann die Leiste 2 in der Leistenebene abgewinkelt werden, vorzugsweise um 90°.

Die Leiste 2 besitzt zusätzlich eine in eine Seitenfläche eingearbeitete V-förmige Nut 4. An dieser Stelle kann die Leiste 2 nach vorne oder hinten abgewinkelt werden, vorzugsweise um 90°.

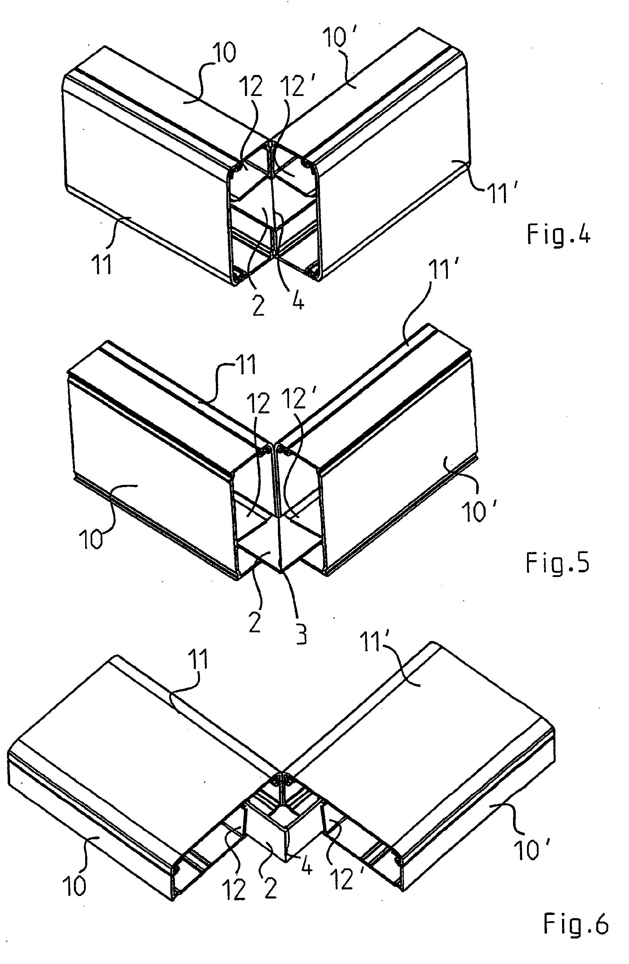

Fig. 4 zeigt eine erste Anwendung der Leiste 2 bei einem Außeneck. Die Leiste 2 ist an der V-förmigen Aussparung 3 nach hinten um 90° abgewinkelt und in die beiden doppelwandigen Trennwände 12, 12' der Kanalunterteil 10, 10' eingesteckt. Die Kanalunterteile 10, 10' sind durch passende Deckel 11, 11' verschlossen. Sobald auf das Außeneck ein passendes Formteil (nicht dargestellt) aufgesteckt ist, ist der Leitungsführungskanal komplett.

Fig. 5 zeigt ein weiteres Anwendungsbeispiel der Leiste 2 bei einem Inneneck. Die Leiste 2 ist im Bereich der V-förmigen Aussparung 3 um 90° abgewinkelt und zwischen die beiden Lippen der Trennwände 12, 12' gesteckt. Die Kammertrennung ist komplett. Nach Aufstecken eines passenden Formteils auf die noch bestehende Lücke ist der Leitungsführungskanal komplett.

Fig. 6 zeigt die Anwendung der Leiste 2 bei einem Flacheck. Die Leiste 2 ist im Bereich der V-förmigen Nut 4 um 90° abgewinkelt und zwischen die beiden Lippen der Trennwände 12, 12' gesteckt. Nach Aufsetzen eines Formteils auf die noch bestehende Lücke ist der Kanal komplett.

## Patentansprüche

1. Leitungsführungskanal, im wesentlichen umfassend
- ein Kanalunterteil (10, 10') mit
- einem Boden,
- zwei Seitenwänden,
- Deckelhalteprofilen an den Seitenwänden
- und eine aus zwei parallelen, gegenseitig beabstandeten Lippen bestehende Trennwand (12, 12') im Kanalunterteil (10, 10')
- und gegebenenfalls einen Deckel (11, 11'),
**gekennzeichnet durch** das Merkmal:
- zwischen den Lippen der Trennwand (12, 12') befindet sich eine einfache herausziehbare Leiste (1, 2).

2. Leitungsführungskanal nach Anspruch 1, **gekennzeichnet durch** das Merkmal:
- die Leiste (2) besitzt eine von einer Längskante ausgehende V-förmige Aussparung (3).

3. Leitungsführungskanal nach Anspruch 1 oder 2, **gekennzeichnet durch** das Merkmal:
- die Leiste (2) besitzt eine in eine Seitenfläche eingearbeitete V-förmige Nut (4).

## Claims

1. Wiring trunking, essentially comprising
- a trunking lower part (10, 10') with
- a bottom,
- two side walls,
- cover retaining profiles at the side walls,
- and a partition (12, 12'), consisting of two parallel, mutually spaced lips, in the trunking lower part (10, 10')
- and optionally a cover (11, 11'),
**characterised by** the feature:
- a single withdrawable strip (1, 2) is located between the lips of the partition (12, 12').

2. Wiring trunking according to Claim 1, **characterised by** the feature:
- the strip (2) has a V-shaped recess (3) extending from one longitudinal edge.

3. Wiring trunking according to Claim 1 or 2, **characterised by** the feature:
- the strip (2) has a V-shaped groove (4) worked into one side face.

## Revendications

1. Canal de guidage de conducteurs, comprenant pour l'essentiel
- une partie inférieure (10, 10') englobant
- un fond,
- deux parois latérales,
- des profilés de retenue d'un couvercle, sur lesdites parois latérales,
- et, dans ladite partie inférieure (10, 10') du canal, une cloison séparatrice (12, 12') composée de deux lèvres parallèles mutuellement espacées
- et un couvercle (11, 11'), le cas échéant,
**caractérisé par** la particularité suivante :
- une simple barrette (1, 2), pouvant être extraite, se trouve entre les lèvres de la cloison séparatrice (12, 12').

2. Canal de guidage de conducteurs, selon la revendication 1, **caractérisé par** la particularité suivante :
- la barrette (2) possède une échancrure (3) configurée en V, partant d'un bord longitudinal.

3. Canal de guidage de conducteurs, selon la revendication 1 ou 2, **caractérisé par** la particularité suivante :
- la barrette (2) possède une rainure (4) configurée en V, pratiquée dans une surface latérale.
